# EUROPÄISCHE PATENTSCHRIFT

(11) **EP 2 036 840 B1**
(45) Veröffentlichungstag und Bekanntmachung des Hinweises auf die Patenterteilung: **07.04.2010**
(21) Anmeldenummer: 08015815.7
(22) Anmeldetag: 09.09.2008
(51) Int. Cl.: B65G 47/90

(54) **Vorrichtung zur Aufnahme und zum Transport eines Gutes**
Device for storing and transporting an article
Dispositif de réception et de transport d'une marchandise

(30) Priorität: 13.09.2007 DE 102007045042; 27.11.2007 DE 102007058265; 09.05.2008 DE 102008023770
(43) Veröffentlichungstag der Anmeldung: 18.03.2009
(73) Patentinhaber: Multivac Sepp Haggenmüller GmbH & Co. KG, 87787 Wolfertschwenden (DE)
(72) Erfinder: Binder, Jan, 73732 Esslingen (DE); Mayer, Steffen, 71277 Rutesheim (DE)
(74) Vertreter: Grünecker, Kinkeldey, Stockmair & Schwanhäusser Anwaltssozietät

(56) Entgegenhaltungen:
- EP-A- 0 594 476
- WO-A-2007/093774
- DE-A1- 3 024 192
- US-A- 1 464 513

## Beschreibung

Die Erfindung betrifft eine Vorrichtung zur Aufnahme und zum Transport eines Gutes, die Aufnahmemittel aufweist, die durch eine Schiebeeinrichtung unter das Gut geschoben werden. Die Aufnahmemittel werden, nachdem sie das Gut von einer Unterlage, zum Beispiel einem Förderband, aufgehoben haben, von einem Roboter an eine andere Stelle bewegt und geben dort das Gut, zum Beispiel in eine Verpackungsschale wieder ab. Derartige Vorrichtungen sind zum Beispiel aus der WO 99/0036, der JP 57-151533 und der WO 2005/051812 bekannt. Der Transport derartiger Güter bereitet dann besondere Probleme, wenn diese so flexibel sind, dass sie beim Aufnehmen durch die Aufnahmemittel zusammengeschoben werden. Es sind dann besondere Maßnahmen zu treffen, um dieses zu vermeiden.

Aus der GB 2 378 432 A ist eine Anordnung bekannt geworden, bei der Greiffinger von beiden Seiten an einen Kuchen angelegt werden, um ihn mit einem gewissen Druck zu halten. Um den Kuchen hochheben zu können, sind die Greiffinger so ausgebildet, dass sie eine Platte aufweisen, über die ein Band gezogen wird. Das Band ist in Kontakt mit dem Kuchen. Wird es über die Platte nach oben gezogen, nimmt es den Kuchen mit hoch.

Eine ähnliche Anordnung, bei der jedoch die Platte nicht vertikal, sondern horizontal bewegt wird, ist in der WO 2007/093774 A1 beschrieben. Dabei muss bei jedem Bewegungstakt eine das Band an einem Ende haltende Feder über die gesamte Bewegungsstrecke des Bandes gespannt werden. Ferner unterliegt das Band bei seiner Bewegung über die Platte einer Abnutzung infolge der Reibung an der Platte.

Eine weitere Vorrichtung der oben genannten Art ist in der eignen älteren deutschen Offentegungschrift DE 10 2008 023 770 A1 der Anmelderin beschrieben.

Ferner ist aus der Druckschrift US 1,464,513 A eine Vorrichtung zur Handhabung von flächigem Material gemäß dem Oberbegiff des Ansprüche 1 und 3 bekannt.

Aufgabe der vorliegenden Erfindung ist es, unter Vermeidung dieser Nachteile eine Vorrichtung der eingangs genannten Art zu schaffen, bei der die Aufnahme des Gutes einfacher und zuverlässiger erfolgt.

Diese Aufgabe wird durch die Vorrichtungen der Ansprüche 1 und 3 gelöst.

Vorteilhafte Weiterbildungen der Erfindung sind in den Unteransprüchen definiert.

Die Rollen heben also das Gut, wenn sie sich unter das Gut schieben, etwas an, wobei jedoch zwischen Gut und Rollen in der Schieberichtung keine Relativbewegung auftritt, durch die Reibungskräfte erzeugt werden, die das Gut zusammenschieben könnten.

Derartige Anordnungen sind nicht nur, wie oben bereits erwähnt, in der Nahrungsmittelindustrie einsetzbar, sondern auch beim Transport elektronischer Komponenten, die zwar starr sind, bei denen jede Art Relativbewegung zwischen Greifern und der Oberfläche vermieden werden muss, um die Oberflächen nicht zu verkratzen. Das sind zum Beispiel Halbleiter-Wafer.

Ausführungsbeispiele der Erfindung und ihrer vorteilhaften Weiterbildungen werden unter Bezugnahme auf die beigefügten Zeichnungen im Folgenden beschrieben. Es stellen dar:
- Figur 1: ein erstes Ausführungsbeispiel,
- Figur 2: eine vergrößerte Darstellung des Bereiches 11 in Figur 1
- Figur 3: eine vergrößerte Darstellung des Bereiches 111 in Figur 2,
- Figur 3a: einen Schnitt in Richtung der Pfeile IIIa-IIIa in Figur 3,
- Figur 4: eine schematische Darstellung der Anordnung nach Figur 1, bei der Rollen 10 das Gut 1 bereits untergriffen haben,
- Figur 5: eine schematische Darstellung der Bewegungsverhältnisse im Bereich des Kontaktes der Rollen 10 mit dem Gut 1,
- Figur 6: die Anordnung nach Figur 1 in Seitenansicht,
- Figur 7: ein zweites Ausführungsbeispiel.

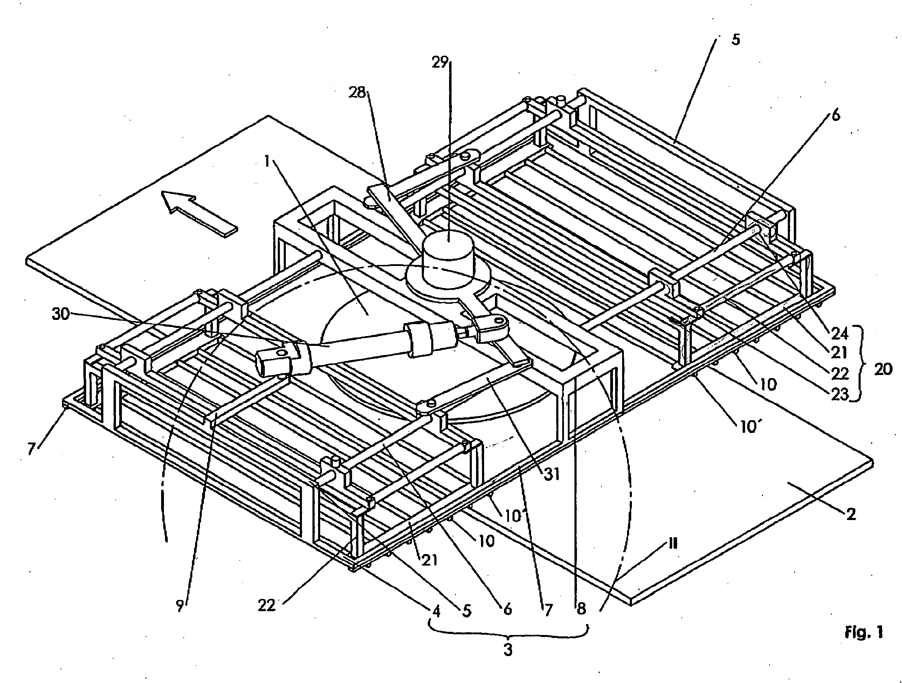

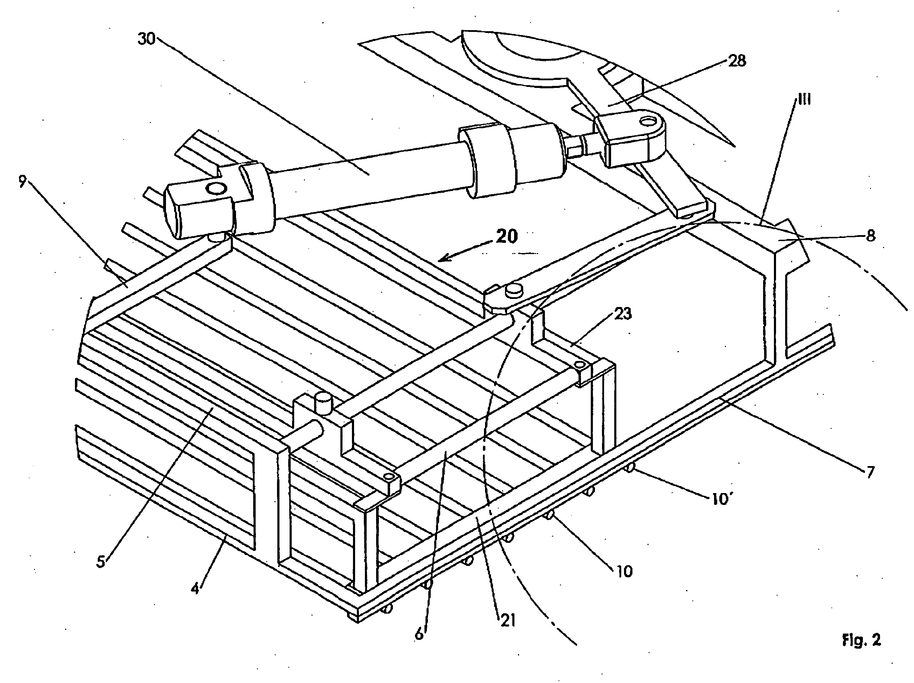

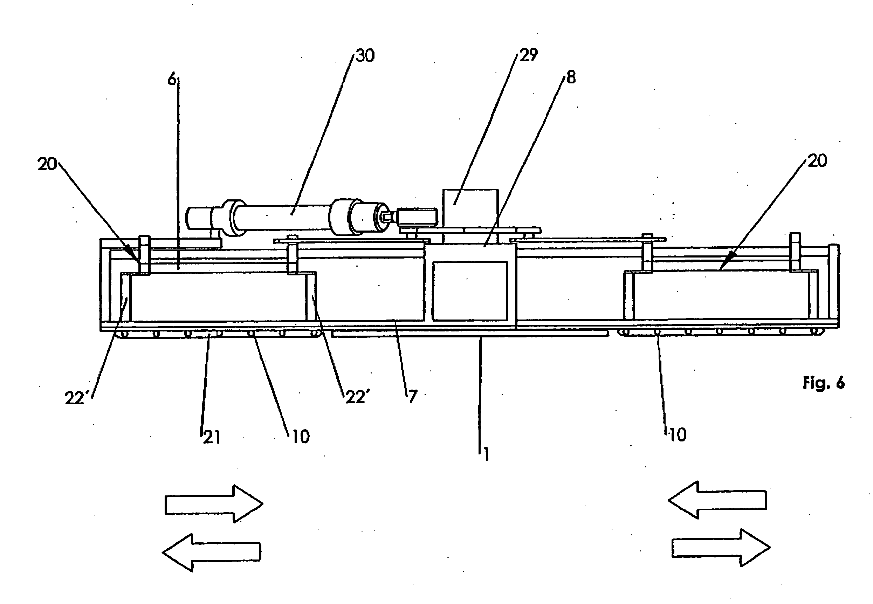

Die Figuren 1 - 3 und 6 zeigen ein Gut 1, zum Beispiel eine Scheibe Wurst, Käse oder Fleisch, die auf einer Fläche, nämlich einem Förderband 2, aufliegt. Das Förderband 2 hat das Gut 1 in diese Position in Richtung des eingezeichneten Pfeils bewegt.

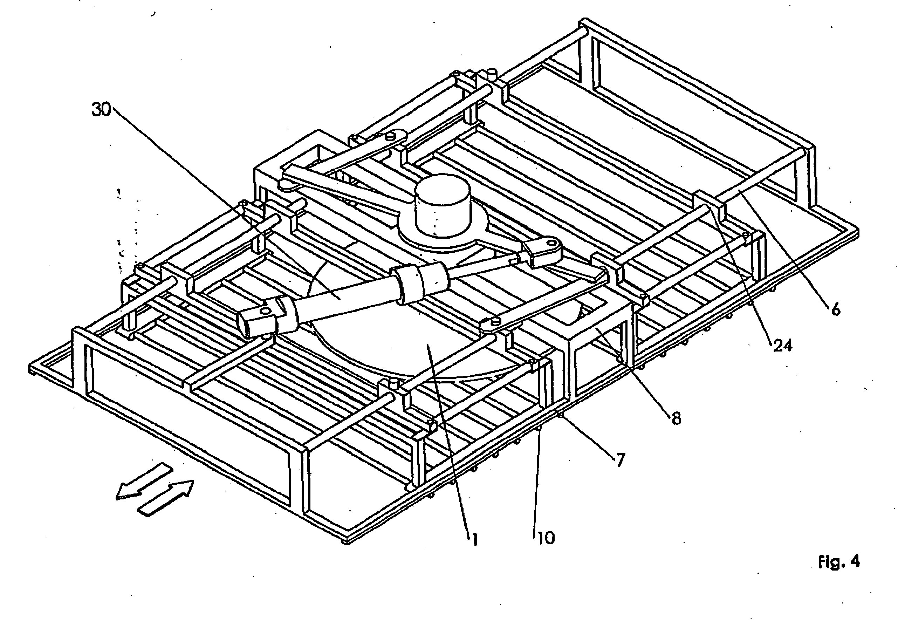

Die Vorrichtung weist beidseitig des Förderbandes 2 je eine stationäre Rahmenstruktur 3 auf, die (jedoch der Einfachheit halber nur auf einer Seite des Bandes mit Bezugszeichen versehen ist) durch Streben 4, damit verbundene U-förmige Bügel 5, an dem Bügel angeordnete Führungsstangen 6, sowie durch zwei weitere Streben 7 gebildet wird, wobei letztere die beiden Rahmenstrukturen 3 miteinander verbinden. Auf den beiden Streben 7 ist mittig ein weiterer kastenförmiger Rahmen 8 angeordnet, der das Lager 29 einer Schiebeeinrichtung trägt, die durch die zwei beidseitig des Förderbandes 2 und damit des Gutes 1 angeordnete Schiebeeinheiten 20, von denen jedoch der Einfachheit halber auch nur eine mit Bezugszeichen versehen ist, hin- und herbewegt werden können (vergleiche die links unten in Figur 4 eingezeichneten Pfeile). Diese Schiebeeinheiten 20 werden durch Streben 21, U-förmige Bügel 22 und Querholme 23 gebildet. Die Querholme sind mit Führungsöffnungen 24 versehen, durch die die Führungsstangen 6 der Rahmenstruktur 3 hindurch geführt sind. Dadurch sind die Schiebeeinheiten 20 auf den Führungsstangen 6 hin- und her bewegbar.

Die Hin- und Herbewegung erfolgt durch einen am Lager 29 an der Platte 4 gelagerten Schwenkhebel 28, an dem die Kolbenstange einer pneumatisch angetriebenen Kolben/Zylinderanordnung 30 angreift, die auf einen Ausleger 9 drehbar gelagert und damit an der Rahmenstruktur 3 abgestützt ist. Der Ausleger 9 ist mit dem U-förmigen Bügel 5 der Rahmenstruktur 3 verbunden. Die Bewegung des Schwenkhebels 28 wird durch einen Kniehebel 31 auf die Querholme 23 und damit auf die Schiebeeinheiten 20 übertragen.

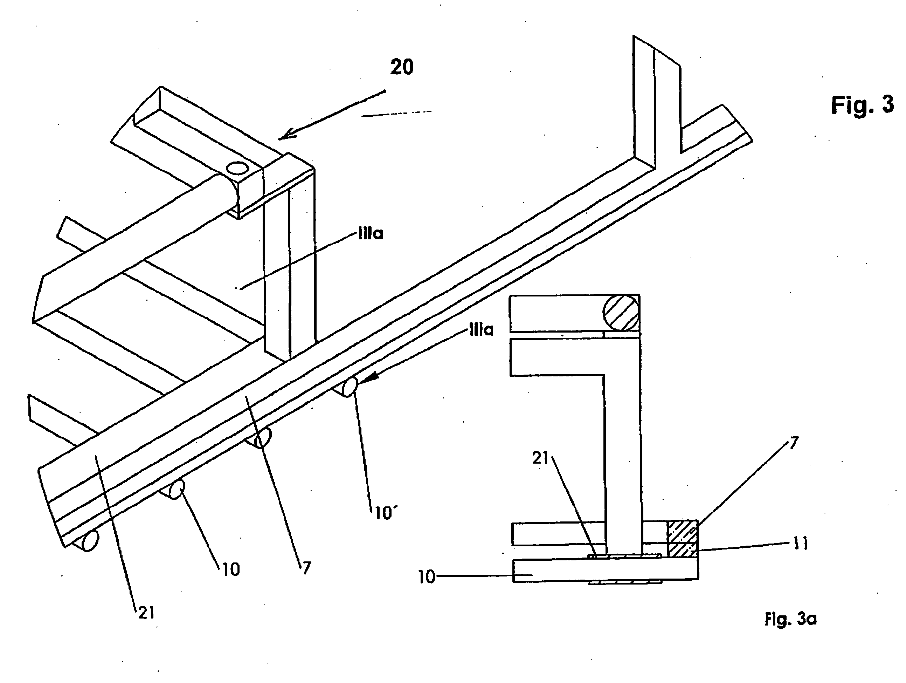

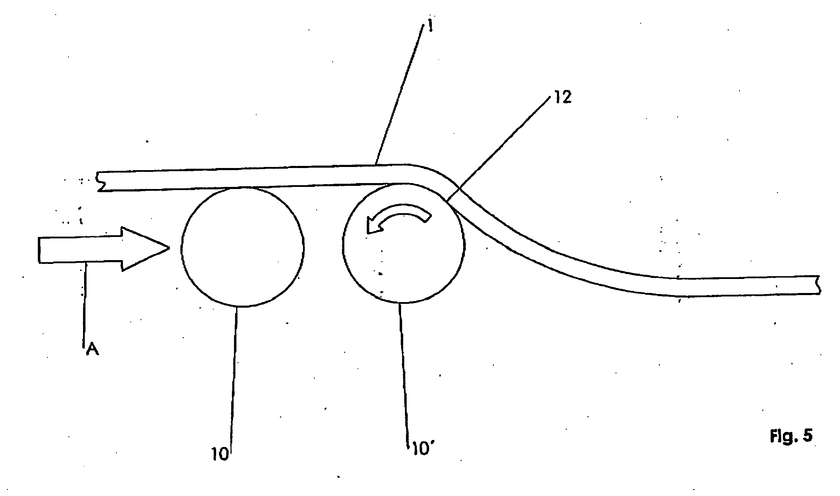

Wie aus Figur 3a zu ersehen, sind Rollen 10 in den Streben 21 drehbar gelagert, die Teil der Schiebeeinheiten 20 sind. Die Streben 21 bilden also die an den Schiebeinheiten 20 angeordneten Lager für die Rollen 10. Auf die freien, nach außen vorstehenden Enden der Rollen 10 drückt mit einem gewissen Anpressdruck jeweils eine der Streben 7, die, wie erwähnt, Teil der stationären Rahmensstruktur 3 sind. Die Streben 7 sind auf ihrer Unterseite mit einem Reibbelag 11 versehen. Wenn sich nun die Schiebeeinheit 20 und mit ihr die Strebe 21 durch pneumatische Betätigung der Kolben/Zylinderanordnung 30 bewegt, dann werden die Rollen 10 durch Verschiebung der Streben 7 und des Reibbelags 11 gedreht, und zwar derart, dass die Geschwindigkeit der Schiebeeinheit 20 gleich der Umfangsgeschwindigkeit der dadurch angetriebenen Rollen 10 ist. Der Antrieb der Rollen 10 kann auch - anstatt durch den Reibbelag 11 - durch Zahnstangen erfolgen, die mit den Streben 7 verbunden sind. Werden nun, wie aus Figur 4 ersichtlich, durch Betätigung der Kolben-/Zylindereinrichtung 30 die Rollen 10 aufeinander zu bewegt, so schieben sich die Rollen 10 in der aus Figur 5 ersichtlichen Weise in Richtung A unter das Gut 1. Die Rollen 10 werden durch die Relativbewegung der Streben 7 im Gegenuhrzeigersinn gedreht, so dass gewährleistet ist, dass in dem Berührungsbereich 12 zwischen den Rollen 10 und der Strebe 7 sich die Rollen 10 entlang ihres Umfangs mit derselben Umfangsgeschwindigkeit drehen, mit der die Rollen in Richtung des eingezeichneten Pfeils A unter das Gut 1 geschoben werden, so dass lediglich ein Anheben, jedoch keine durch eine Kraft verursachte Relativbewegung der Umfangsfläche der sich drehenden Rolle 10 gegenüber dem Gut 1 in Schieberichtung stattfindet. Ein flexibles Gut, wie zum Beispiel eine Scheibe Wurst, Käse oder Fleisch, wird also nicht zusammengeschoben oder gefaltet. Das Gut muss lediglich so viel Stabilität haben, dass es zwischen zwei aufeinander folgend angeordneten Rollen 10 nicht in den Zwischenraum fällt.

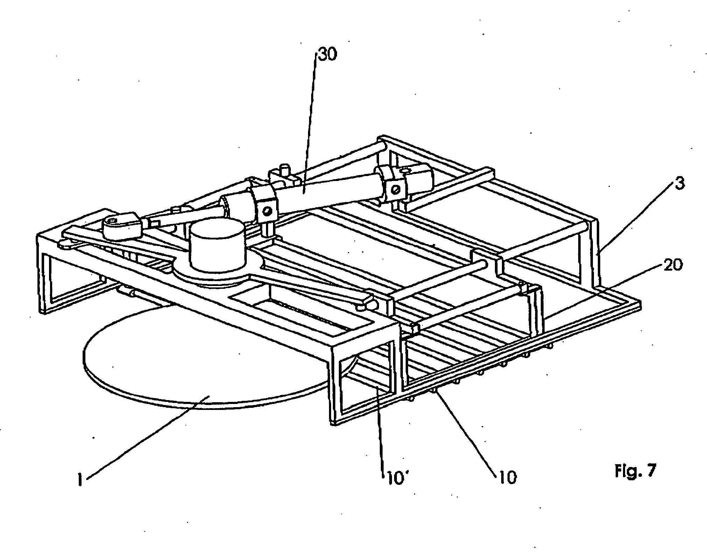

Figur 7 zeigt ein Ausführungsbeispiel, bei dem lediglich eine stationäre Rahmenstruktur 3 und lediglich eine Schiebeeinheit 20 vorgesehen sind, die von nur einer Seite an einem Gut 1 Gegenstand angreifen. Ansonsten entsprechen die Bauteile denjenigen nach den Figuren 1 - 6.

Die gesamte Vorrichtung kann an dem Lager 29, die die Form eines Zapfens oder einer Nabe hat, an einem Roboter befestigt und an einen anderen Ort transportiert werden.

### Bezugszeichenliste

- 1: Gut
- 2: Förderband
- 3: stationäre Rahmenstruktur
- 4: Streben
- 5: U-förmiger Bügel
- 6: Führungsstangen
- 7: Streben
- 8: kastenartiger Rahmen
- 9: Ausleger
- 10: Rollen
- 10': vorderste Rolle
- 11: Reibbelag
- 12: Berührungsbereich
- 20: Schiebeeinheiten
- 21: Streben
- 22: U-förmiger Bügel
- 23: Querholme
- 24: Führungsöffnungen
- 28: Schwenkhebel
- 29: Lager
- 30: Kolben-Zylinderanordnung
- 31: Kniehebel
- A: Schieberichtung

## Patentansprüche

1. Vorrichtung zur Aufnahme und zum Transport eines Gutes (1), die eine stationäre Rahmenstruktur (3), eine dieser gegenüber verschiebbare Schiebeeinheit (20) und durch Rollen gebildete Aufnahmemittel aufweist, wobei die Rollen (10) an der Schiebeeinheit gelagert sind und quer zu der Richtung, in der die Rollen (10) durch die Schiebeeinheit (20) unter das Gut (1) geschoben werden können, angeordnet sind und wobei die Rollen (10) derart angetrieben werden, dass ihre Umfangsgeschwindigkeit gleich, jedoch der Richtung entgegengesetzt der Geschwindigkeit ist, mit der sie unter das Gut (1) geschoben werden, **dadurch gekennzeichnet, dass** der Antrieb der Rollen (10) durch Reibung erfolgt, die von einem Bauteil (7) der stationären Rahmenstruktur (3) auf die Rollen (10) übertragen wird.

2. Vorrichtung nach Anspruch 1, **dadurch gekennzeichnet, dass** das Bauteil (7) einen Reibbelag (11) aufweist und an die Rollen (10) angedrückt wird.

3. Vorrichtung zur Aufnahme und zum Transport eines Gutes (1), die eine stationäre Rahmenstruktur (3), eine dieser gegenüber verschiebbare Schiebeeinheit (20) und durch Rollen gebildete Aufnahmemittel aufweist, wobei die Rollen (10) an der Schiebeeinheit gelagert sind und quer zu der Richtung, in der die Rollen (10) durch die Schiebeeinheit (20) unter das Gut (1) geschoben werden können, angeordnet sind und wobei die Rollen (10) derart angetrieben werden, dass ihre Umfangsgeschwindigkeit gleich, jedoch der Richtung entgegengesetzt der Geschwindigkeit ist, mit der sie unter das Gut (1) geschoben werden, **dadurch gekennzeichnet, dass** der Antrieb der Rollen (10) durch eine an der stationären Rahmenstruktur (3) angeordnete Zahnstange erfolgt.

4. Vorrichtung nach einem der vorgenannten Ansprüche, **dadurch gekennzeichnet, dass** mindestens die in Richtung der Bewegung der Schiebeeinheit (20) unter das Gut (1) vordere Rolle (10') angetrieben wird, und dass die nicht angetriebenen Rollen (10) frei drehbar sind.

5. Vorrichtung nach einem der vorgenannten Ansprüche, **dadurch gekennzeichnet, dass** zu beiden Seiten des Gutes (1) eine Schiebeeinheit (20) angeordnet ist und beide Schiebeeinheiten (20) durch eine pneumatische Kolben-/Zylinderanordnung (30) aufeinander zu- und voneinander wegbewegt werden können.

## Claims

1. Device for receiving and transporting an article (1), comprising a stationary frame structure (3), a sliding unit (20) which is displaceable relative to said frame structure, and receiving means formed by rollers, the rollers (10) being mounted on the sliding unit and arranged transversely to the direction in which the rollers (10) can be slid beneath the article (1) by the sliding unit (20), and the rollers (10) being driven in such a way that their circumferential velocity is equal to the speed at which they are slid beneath the article (1) but oriented in the opposite direction thereto, **characterised in that** the rollers (10) are driven by friction which is transferred to the rollers (10) from a component (7) of the stationary frame structure (3).

2. Device according to claim 1, **characterised in that** the component (7) comprises a friction lining (11) and is pressed against the rollers (10).

3. Device for receiving and transporting an article (1), comprising a stationary frame structure (3), a sliding unit (20) which is displaceable relative to said frame structure, and receiving means formed by rollers, the rollers (10) being mounted on the sliding unit and arranged transversely to the direction in which the rollers (10) can be slid beneath the article (1) by the sliding unit (20), and the rollers (10) being driven in such a way that their circumferential velocity is equal to the speed at which they are slid beneath the article (1) but oriented in the opposite direction thereto, **characterised in that** the rollers (10) are driven by a toothed rack arranged on the stationary frame structure (3).

4. Device according to any one of the preceding claims, **characterised in that** at least the roll (10') in a front position relative to the direction of movement of the sliding unit (20) beneath the article (1) is driven, and **in that** the undriven rollers (10) are freely rotatable.

5. Device according to any one of the preceding claims, **characterised in that** a sliding unit (20) is arranged on either side of the article (1) and both siding units (20) can be moved towards and away from one another by a pneumatic piston/cylinder arrangement (30).

## Revendications

1. Dispositif de réception et de transport d'un produit (1), qui comporte une structure de châssis fixe (3), une unité coulissante (20) mobile par rapport à celle-ci et des moyens de réception formés par des rouleaux, les rouleaux (10) étant montés sur l'unité coulissante et étant disposés transversalement par rapport au sens dans lequel ils peuvent être amenés par l'unité coulissante (20) sous le produit (1), et les rouleaux (10) étant entraînés de telle sorte que leur vitesse circonférentielle soit égale, mais en sens inverse par rapport à la vitesse à laquelle ils sont glissés sous le produit (1), **caractérisé en ce que** l'entraînement des rouleaux (10) se fait par une friction qui est transmise par un élément (7) de la structure de châssis fixe (3) aux rouleaux (10).

2. Dispositif selon la revendication 1, **caractérisé en ce que** l'élément (7) présente une garniture de friction (11) et est pressé contre les rouleaux (10).

3. Dispositif de réception et de transport d'un produit (1), qui comporte une structure de châssis fixe (3), une unité coulissante (20) mobile par rapport à celle-ci et des moyens de réception formés par des rouleaux, les rouleaux (10) étant montés sur l'unité coulissante et étant disposés transversalement par rapport au sens dans lequel ils peuvent être amenés par l'unité coulissante (20) sous le produit (1), et les rouleaux (10) étant entraînés de telle sorte que leur vitesse circonférentielle soit égale, mais en sens inverse par rapport à la vitesse à laquelle ils sont glissés sous le produit (1), **caractérisé en ce que** l'entraînement des rouleaux (10) se fait grâce à une crémaillère disposée sur la structure de châssis fixe (3).

4. Dispositif selon l'une des revendications précédentes, **caractérisé en ce qu'**au moins le rouleau (10') avant dans le sens du déplacement de l'unité coulissante (20) jusque sous le produit (1) est entraîné, et **en ce que** les rouleaux (10) non entraînés sont librement rotatifs.

5. Dispositif selon l'une des revendications précédentes, **caractérisé en ce qu'**une unité coulissante (20) est disposée de chaque côté du produit (1), et les deux unités coulissantes (20) peuvent être rapprochées et éloignées l'une de l'autre par un dispositif pneumatique à piston/cylindre (30).
